# EUROPÄISCHE PATENTSCHRIFT

(11) **EP 0 770 886 B1**
(45) Veröffentlichungstag und Bekanntmachung des Hinweises auf die Patenterteilung: **24.03.1999**
(21) Anmeldenummer: 96116781.4
(22) Anmeldetag: 18.10.1996
(51) Int. Cl.: G01S 15/88, G01S 7/527, G01F 23/296, G01S 15/52

(54) **Verfahren und Anordnung zur Unterdrückung von Festzielechos bei der Abstandsmessung nach dem Impulslaufzeitprinzip**
Method and device for suppressing fixed target echoes during range measurement using the pulse time of flight principle
Procédé et dispositif pour supprimer l'échos de cible fixes pour la télémétrie employant le temps de vol d'impulsions

(30) Priorität: 27.10.1995 DE 19540170
(43) Veröffentlichungstag der Anmeldung: 02.05.1997
(73) Patentinhaber: Endress + Hauser GmbH + Co., 79689 Maulburg (DE)
(72) Erfinder: Michalski, Bernhard, 79689 Maulburg (DE)
(74) Vertreter: Leiser, Gottfried, Dipl.-Ing.

(56) Entgegenhaltungen:
- EP-A- 0 340 953
- EP-A- 0 573 034
- DE-A- 4 308 373
- GB-A- 2 050 022

## Beschreibung

Die Erfindung betrifft ein Verfahren zur Unterdrückung von Festzielechos bei der Abstandsmessung nach dem Impulslaufzeitprinzip, wobei in jedem Meßzyklus in einer Sendephase ein Sendeimpuls mit einer vorgegebenen Sendefrequenz ausgesendet wird und in einer anschließenden Empfangsphase die Hüllkurve der Empfangssignale mit der Sendefrequenz gebildet wird, um die Laufzeit des Nutzechoimpulses zu bestimmen und daraus den zu messenden Abstand zu berechnen, und wobei vor der Messung Informationen über Festzielechos erfaßt und gespeichert werden, die in jedem Meßzyklus zur Unterdrückung der Festzielechos verwendet werden.

Verfahren dieser Art sind aus der US 4 890 266 A1 und aus der DE 42 18 303 C1 bekannt. Bei diesen bekannten Verfahren werden ein Echoprofil der Empfangssignale und ein die Festzielechos enthaltendes Schwellenprofil gebildet und gespeichert. Der Auswertung werden dann nur diejenigen Komponenten des Echoprofils unterworfen, die das Schwellenprofil übersteigen. Die Speicherung der Profile erfordert jedoch eine sehr große Speicherkapazität.

Aufgabe der Erfindung ist die Schaffung eines Verfahrens der eingangs angegebenen Art, das die Unterdrückung von Festzielechos mit einem sehr geringen Speicherbedarf ermöglicht.

Nach der Erfindung wird diese Aufgabe dadurch gelöst, daß bei der Erfassung der Informationen über ein Festzielecho ein die Hüllkurve des Festzielechos umgebender gebrochener Linienzug aus mehreren geraden Strecken gebildet wird, daß für jede Strecke eine Information über die Amplitude des Endpunkts der Strecke, eine Information über die Änderungsrichtung der Strecke und eine Information über die Steigung der Strecke sowie für die erste Strecke eine Information über den Zeitpunkt des Anfangs der Strecke im Meßzyklus gespeichert werden, daß im Verlauf jedes Meßzyklus ab dem Zeitpunkt des Anfangs der ersten Strecke für jede Strecke Zählimpulse mit einer durch die Steigungsinformation bestimmten Folgefrequenz in einer durch die Richtungsinformation bestimmten Zählrichtung bis zum Erreichen eines durch die Amplitudeninformation bestimmten Zählerstandes gezählt werden, und daß im Verlauf des Meßzyklus der jeweils aktuelle Zählerstand zur Steuerung der Unterdrückung des Festzielechos verwendet wird.

Der Speicherbedarf für die Speicherung der Informationen über jede Strecke des gebrochenen Linienzugs ist sehr gering. Die gespeicherten Informationen werden im Verlauf jedes Meßzyklus unmittelbar verarbeitet und auf die eintreffenden Empfangssignale angewendet, so daß die Festzielunterdrückung erfolgt, ohne daß ein Echoprofil der Empfangssignale benötigt wird. Es entfällt daher auch der Speicherbedarf für ein solches Echoprofil.

Das erfindungsgemäße Verfahren ermöglicht die Unterdrückung der Festzielechos in zwei verschiedenen Betriebsarten. Die eine Betriebsart besteht darin, daß in Abhängigkeit von dem im Verlauf des Meßzyklus jeweils aktuellen Zählerstand die Verstärkung eines die Empfangssignale verstärkenden Verstärkers derart eingestellt wird, daß die Amplitude eines dem gebrochenen Linienzug entsprechenden Hüllkurvensignals einen vorgegebenen Schwellenwert nicht überschreitet.

Die andere Betriebsart besteht darin, daß in Abhängigkeit von dem im Verlauf des Meßzyklus jeweils aktuellen Zählerstand die Auswertung des Hüllkurvensignals in einer Zeitspanne gesperrt wird, in der die Amplitude eines dem gebrochenen Linienzug entsprechenden Hüllkurvensignals einen vorgegebenen Schwellenwert überschreiten würde.

Eine Anordnung zur Durchführung des erfindungsgemäßen Verfahrens mit einer Einrichtung zur Aussendung eines Sendeimpulses in der Sendephase jedes Meßzyklus und mit einer Signalverarbeitungsschaltung für die Empfangssignale, die in der sich an die Sendephase anschließenden Empfangsphase in jedem Meßzyklus empfangen werden, wobei die Signalverarbeitungsschaltung einen Analogschaltungsteil zur Verstärkung und Filterung der Empfangssignale und zur Bildung der Hüllkurve der Empfangssignale enthält, und wobei die Signalverarbeitungsschaltung einen Distanz zähler enthält, der im Verlauf des Meßzyklus fortlaufend die Perioden eines Taktsignals als Maß für die seit dem Beginn des Meßzyklus verstrichene Zeit zählt, ist nach der Erfindung dadurch gekennzeichnet, daß die Signalverarbeitungsschaltung für jedes Festziel, dessen Festzielecho unterdrückt werden soll, eine Festzielschaltung aufweist, die einen Festzielspeicher enthält, in dem die Amplitudeninformationen, die Richtungsinformationen und die Steigungsinformationen für alle Strecken des gebrochenen Linienzugs in Form einer Tabelle gespeichert sind, die für jede Strecke eine Zeile enthält, und daß jede Festzielschaltung ein Festzielstartregister enthält, in dem die Informationen über den Zeitpunkt des Anfangs der ersten Strecke im Meßzyklus gespeichert ist, sowie einen Festzielstartkomparator, der die im Festzielstartregister gespeicherte Information ständig mit dem Zählerstand des Distanzzählers vergleicht und bei Feststellung der Gleichheit die zeilenweise Verarbeitung der im Festzielspeicher gespeicherten Informationen auslöst.

Vorteilhafte Ausgestaltungen und Weiterbildungen des erfindungsgemäßen Verfahrens und der Anordnung zu seiner Durchführung sind in den Unteransprüchen gekennzeichnet.

Weitere Merkmale und Vorteile der Erfindung ergeben sich aus der folgenden Beschreibung eines Ausführungsbeispiels anhand der Zeichnung. In der Zeichnung zeigen:
- Fig. 1: eine schematische Darstellung zur Erläuterung der Abstandsmessung nach dem Impulslaufzeitprinzip am Beispiel der Messung des Füllstands in einem Behälter mittels Ultraschallimpulsen,
- Fig. 2: ein Blockschaltbild der Signalverarbeitungsschaltung der Anordnung von Fig. 1,
- Fig. 3: das Blockschaltbild einer der Festzielschaltungen in der Signalverarbeitungsschaltung von Fig. 2 und
- Fig. 4: ein Zeitdiagramm zur Erläuterung der Funktionsweise der Festzielschaltung von Fig. 3.

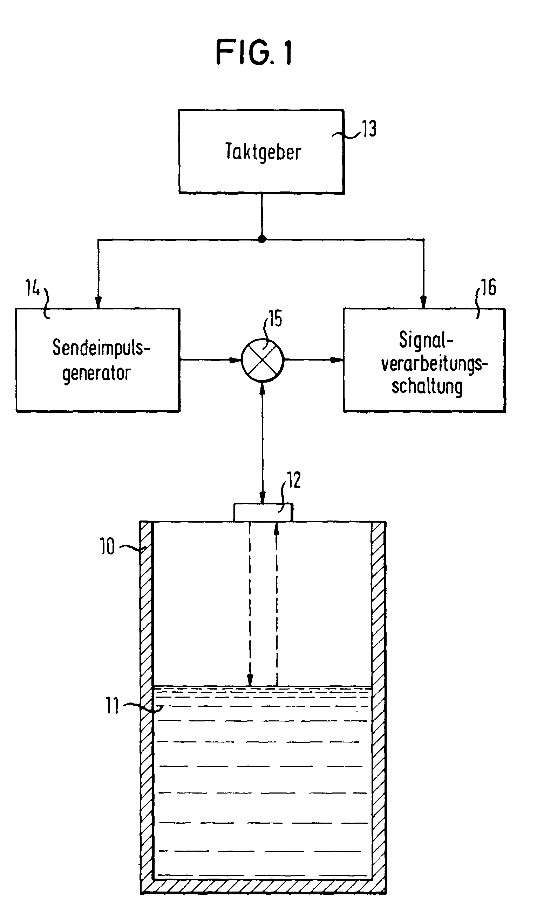

Fig. 1 zeigt als Beispiel für die Abstandsmessung nach dem Impulslaufzeitverfahren eine Anordnung zur Messung des Füllstands in einem Behälter 10, der ein Füllgut 11 enthält. An der Oberseite des Behälters 10 ist oberhalb des höchsten vorkommenden Füllstands ein Ultraschallwandler 12 angeordnet, der abwechselnd als Sendewandler und als Empfangswandler arbeitet. In der Sendephase wird der Ultraschallwandler 12 durch ein elektrisches Signal erregt, so daß er einen Ultraschallimpuls erzeugt, der senkrecht nach unten auf das im Behälter befindliche Füllgut 11 gerichtet ist. In der Empfangsphase empfängt der Ultraschallwandler 12 das an der Oberfläche des Füllguts 11 reflektierte Echosignal, das er in ein elektrisches Signal umwandelt. Eine Sendephase und eine Empfangsphase bilden zusammen einen Meßzyklus. Ein Taktgeber 13 steuert die zeitliche Aufeinanderfolge der Meßzyklen und den zeitlichen Ablauf der Vorgänge innerhalb jedes Meßzyklus.

Ein vom Taktgeber 13 am Beginn jedes Meßzyklus ausgelöster Sendeimpulsgenerator 14 erzeugt während der Sendephase das für die Erregung des Ultraschallwandlers 12 erforderliche impulsförmige elektrische Signal mit der Frequenz der auszusendenden Ultraschallwelle. Dieses Signal wird dem Ultraschallwandler 12 über eine Sende-Empfangs-Weiche 15 zugeführt. Alle nach dem Aufhören des Sendeimpulses am Ultraschallwandler 12 eintreffenden Ultraschallsignale werden von diesem in ein elektrisches Empfangssignal umgesetzt, das über die Sende-Empfangs-Weiche 15 einer Signalverarbeitungsschaltung 16 zugeführt wird. Zu diesen empfangenen Ultraschallsignalen gehört insbesondere auch der Nutzechoimpuls, der an der Oberfläche des Füllguts 11 reflektiert wird und dessen Laufzeit vom Ultraschallwandler 12 zur Füllgutoberfläche und wieder zurück zum Ultraschallwandler 12 gemessen werden soll. Aus dieser Laufzeit läßt sich der Abstand der Füllgutoberfläche vom Ultraschallwandler 12 und damit der Füllstand im Behälter 10 bestimmen.

Zu den vom Ultraschallwandler 12 empfangenen Ultraschallsignalen gehören außer dem Nutzechoimpuls auch Störechosignale, die an festen Einbauten im Behälter reflektiert werden und deshalb "Festzielechos" genannt werden. Eine wesentliche Aufgabe der Signalverarbeitungsschaltung 16 besteht darin, den Nutzechoimpuls aus der Gesamtheit der empfangenen Ultraschallsignale herauszufinden, damit nicht ein falsches Ultraschallsignal als Nutzechoimpuls interpretiert und zur Laufzeitmessung verwendet wird. Hierzu wird insbesondere angestrebt, die Festzielechos in dem Empfangssignal zu unterdrücken.

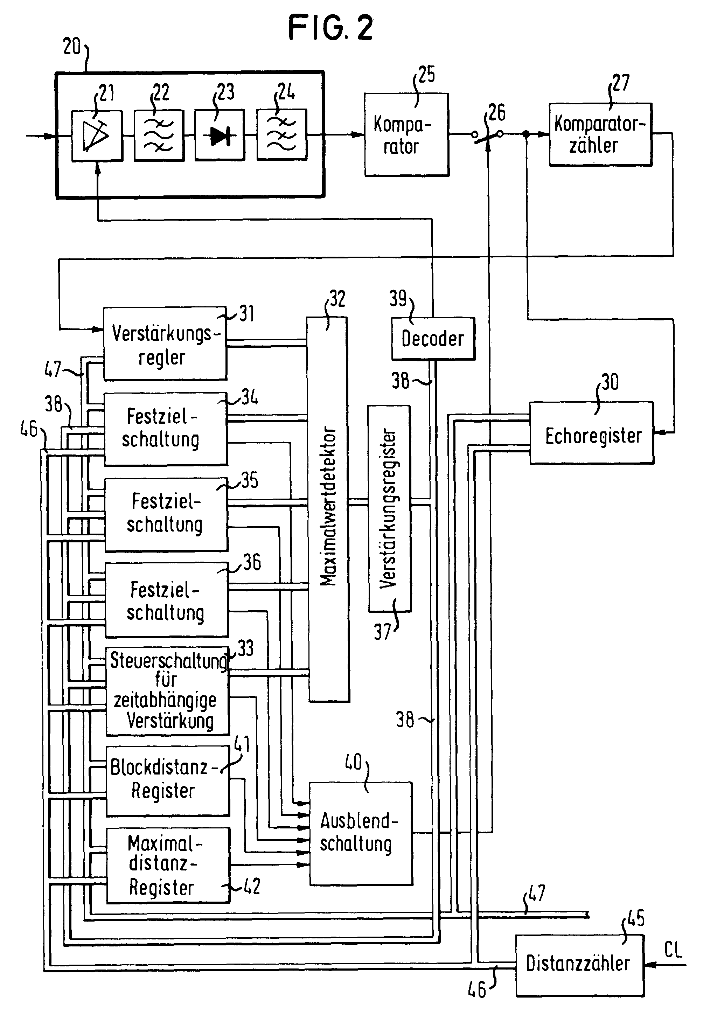

Fig. 2 zeigt das Blockschaltbild einer Ausführungsform der Signalverarbeitungsschaltung 16, in der besondere Maßnahmen zur Unterdrückung der Festzielechos getroffen sind. Die Signalverarbeitungsschaltung von Fig. 2 enthält einen Analogschaltungsteil 20, dem das vom Ultraschallwandler 12 gelieferte Empfangssignal zugeführt wird. Der Analogschaltungsteil 20 enthält hintereinander einen Verstärker 21 mit einstellbarer Verstärkung, ein Bandpaßfilter 22, einen Gleichrichter 23 und ein Tiefpaßfilter 24. Der Verstärker 21 verstärkt das vom Ultraschallwandler 12 gelieferte Empfangssignal mit einer in 64 diskreten Stufen einstellbaren Verstärkung. Das Bandpaßfilter 22 ist auf die Frequenz der Ultraschallwelle abgestimmt und filtert aus dem Empfangssignal den Frequenzbereich aus, der die Echosignale enthält. Das verstärkte und gefilterte Empfangssignal wird durch den Gleichrichter 23 gleichgerichtet, der in Verbindung mit dem nachgeschalteten Tiefpaßfilter 24 das Hüllkurvensignal des Empfangssignals bildet. Das Hüllkurvensignal wird vom Ausgang des Tiefpaßfilters 24 einem Komparator 25 zugeführt, in dem es mit einem fest eingestellten Schwellenwert verglichen wird. Der Komparator 25 gibt bei jedem Überschreiten des Schwellenwerts am Ausgang einen Impuls ab, der über einen normalerweise geschlossenen Freigabeschalter 26 einerseits einem Komparatorzähler 27 und andererseits einem Echoregister 30 zugeführt wird. Der Zählerstand des Komparatorzählers 27 wird bei jedem Überschreiten des Schwellenwerts um eine Einheit erhöht und einem Verstärkungsregler 31 zugeführt, in dem er für eine interne Verstärkungsregelung verwendet wird. Der Verstärkungsregler 31 liefert am Ausgang ein digitales Datenwort, das die einzustellende Verstärkung angibt, zu einem Maximalwertdetektor 32.

Der Maximalwertdetektor 32 empfängt weitere Datenwörter, die die einzustellende Verstärkung angeben, von einer Steuerschaltung 33 für zeitabhängige Verstärkung, die zur Kompensation der laufzeitabhängigen Dämpfung der Echosignale dient, sowie von drei Festzielschaltungen 34, 35 und 36. Der Maximalwertdetektor 32 ermittelt aus den fünf zugeführten Datenwörtern ständig das Datenwort mit dem höchsten numerischen Wert und liefert dieses Datenwort an seinem Ausgang zu einem Verstärkungsregister 37, das somit stets das den aktuellen Verstärkungswert angebende Datenwort enthält. Es ist zu beachten, daß das Datenwort mit dem höchsten numerischen Wert der geringsten Verstärkung entspricht, denn jedes Datenwort gibt den Betrag an, um den die Verstärkung des Verstärkers 21 vom Höchstwert herabzusetzen ist. Das im Verstärkungsregister 37 gespeicherte Datenwort wird über einen Bus 38 einem Decoder 39 zugeführt, der ein Verstärkungssteuersignal erzeugt, das die Verstärkung des Verstärkers 21 so einstellt, daß sie dem im Verstärkungsregister 37 gespeicherten Datenwort entspricht. An den Bus 38 sind auch die drei Festzielschaltungen 34, 35, 36 und die Steuerschaltung 33 für zeitabhängige Verstärkung angeschlossen.

Die Steuerschaltung 33 und jede der Festzielschaltungen 34, 35 und 36 kann anstelle des Verstärkungs-Datenworts an einem weiteren Ausgang ein Ausblendsignal zu einer Ausblendschaltung 40 liefern. Wenn die Ausblendschaltung 40 ein Ausblendsignal empfängt, öffnet sie den Freigabeschalter 26, wodurch die Verbindung des Ausgangs des Komparators 25 mit dem Komparatorzähler 27 und dem Echoregister 30 unterbrochen wird. Dadurch wird die Verwertung des vom Analogschaltungsteil 20 gelieferten Hüllkurvensignals verhindert.

Die Ausblendschaltung 40 empfängt weitere Ausblendsignale von einem Blockdistanz-Register 41 und einem Maximaldistanz-Register 42. Das vom Blockdistanz-Register 41 gelieferte Ausblendsignal sperrt durch Öffnen des Freigabeschalters 26 die Auswertung des Hüllkurvensignals während der Nachschwingzeit des Ultraschallwandlers 12 nach dem Ende des Sendeimpulses. Das vom Maximaldistanz-Register 42 gelieferte Ausblendsignal sperrt durch Öffnen des Freigabeschalters 26 die Auswertung des Hüllkurvensignals in dem Bereich, der hinter der maximalen Meßentfernung liegt.

Ein Distanz zähler 45 dient als Zeitreferenz für die Signalverarbeitung. Er wird vor dem Beginn jedes Meßzyklus auf Null gesetzt und zählt im Verlauf jedes Meßzyklus die Perioden eines Taktsignals CL mit der Frequenz f_{CL}. Der Zählwert ist ein Maß für die seit dem Beginn des Meßzyklus abgelaufene Zeit und, bei bekannter Schallgeschwindigkeit, auch für die von einem Echoimpuls zurückgelegte Entfernung. Der Distanzzähler 45 ist beispielsweise ein 14 Bit breiter Zähler, der somit 16384 Perioden zählen kann. Der Zählwert wird über einen Bus 46 laufend dem Echoregister 30, der Steuerschaltung 33 für zeitabhängige Verstärkung, den drei Festzielschaltungen 34, 35, 36, dem Blockdistanz-Register 41 und dem Maximaldistanz-Register 42 zugeführt. Der Zählwert wird im Echoregister 30 gespeichert, wenn dieses einen Impuls vom Komparator 25 empfängt.

Über einen Bus 47 können Daten mit dem Verstärkungsregler 31, den drei Festzielschaltungen 34, 35, 36, der Steuerschaltung 33 für zeitabhängige Verstärkung, dem Blockdistanzregister 41 und dem Maximaldistanzregister 42 ausgetauscht werden.

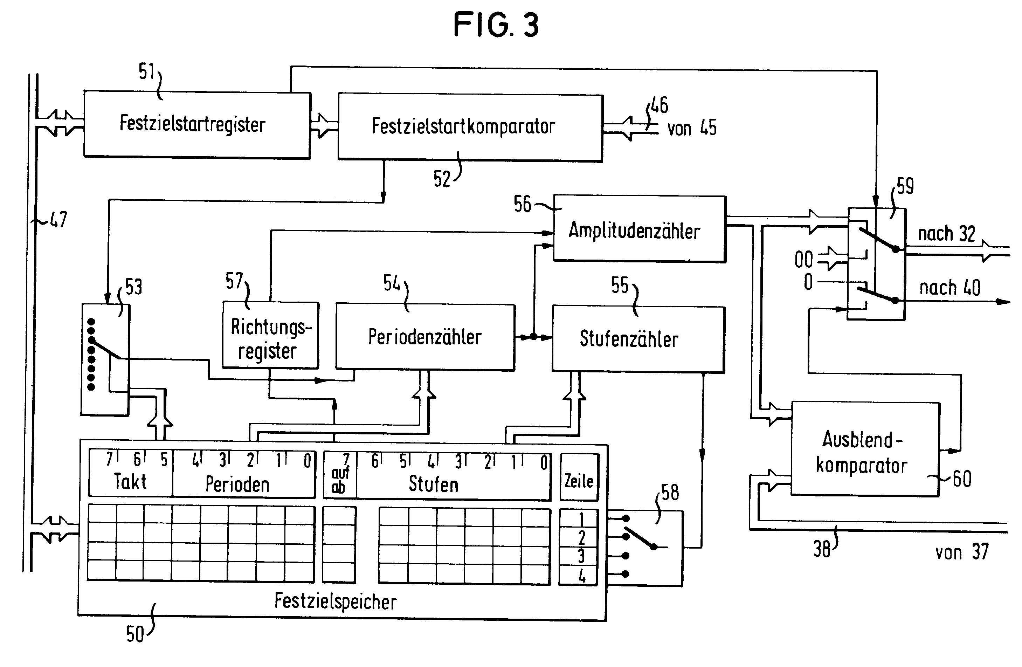

Jede der drei Festzielschaltungen 34, 35 und 36 ermöglicht die Behandlung des von einem Festziel stammenden Festzielechos. Mit der in Fig. 2 dargestellten Signalverarbeitungsschaltung können also die von drei Festzielen stammenden Festzielechos unabhängig voneinander behandelt werden, auch wenn sich die Festzielechos überlappen. Grundsätzlich können beliebig viele Festziele behandelt werden, indem für jedes Festziel eine weitere Festzielschaltung hinzugefügt wird. Alle Festzielschaltungen sind gleich aufgebaut, und sie arbeiten in identischer Weise und unabhängig voneinander. Nachfolgend wird eine Festzielschaltung anhand des detaillierteren Blockschaltbilds von Fig. 3 beschrieben; diese Beschreibung gilt auch für alle anderen Festzielschaltungen.

Für die Festzielunterdrückung wird die Tatsache ausgenutzt, daß die von Festzielen stammenden Echosignale sowohl hinsichtlich ihrer zeitlichen Lage im Meßzyklus als auch hinsichtlich der Form ihrer Hüllkurve über längere Zeiträume unveränderlich sind. Daher können die Hüllkurven der Festzielechos vor der Inbetriebnahme aufgenommen und abgespeichert werden, und die gespeicherten Werte können dann in jedem Meßzyklus zur Festzielunterdrückung verwendet werden. Die in Fig. 3 dargestellte Festzielschaltung enthält einen Festzielspeicher 50, in dem Informationen über die Hüllkurve des Festzielechos gespeichert sind, das mit dieser Schaltung unterdrückt werden soll.

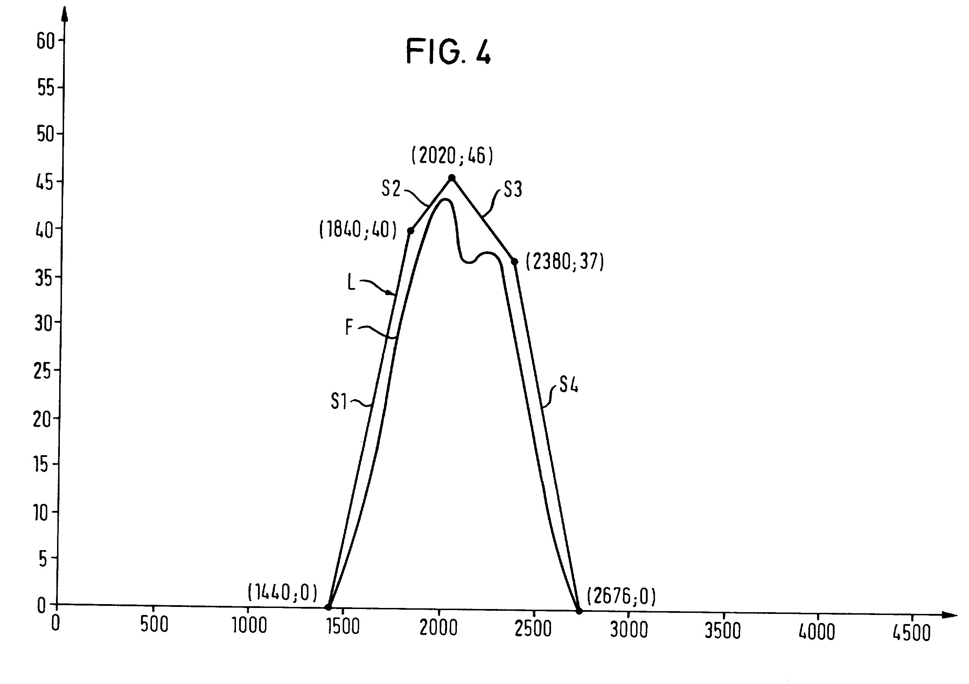

Wenn ein vollständiges Echoprofil des Festzielechos gespeichert wird, indem aus dem Echoprofil Abtastwerte in regelmäßigen Zeitabständen entnommen werden, diese Abtastwerte digitalisiert und die digitalen Codewörter in Zuordnung zu den Abtastzeitpunkten gespeichert werden, ist die erforderliche Speicherkapazität sehr groß. Bei der Festzielschaltung von Fig. 3 wird daher ein anderes Verfahren angewendet, das es ermöglicht, mit einem Festzielspeicher 50 von sehr geringer Kapazität auszukommen. Dieses Verfahren wird anhand des Zeitdiagramms vom Fig. 4 erläutert.

Das Diagramm von Fig. 4 zeigt den zeitlichen Verlauf der Hüllkurve F eines Festzielechos, wie sie am Ausgang des Tiefpaßfilters 24 erhalten wird. Als Zeitmaßstab ist auf der Abszisse des Diagramms die Anzahl der Perioden des Taktsignals CL aufgetragen, wie sie vom Distanz zähler 45 gezählt werden. Als Amplitudenmaßstab ist auf der Ordinate des Diagramms die Anzahl der Verstärkungsstufen aufgetragen, in denen der Verstärker 21 einstellbar ist. Wie zuvor erwähnt, ist die Verstärkung in 64 Stufen einstellbar, die von 0 bis 63 numeriert sind.

Um die Hüllkurve F ist in Fig. 4 ein gebrochener Linienzug L aus vier geraden Strecken S1, S2, S3, S4 gelegt, der die Hüllkurve F möglichst eng umschließt. An den Endpunkten jeder Strecke sind die Koordinaten in den zuvor erläuterten Maßstäben angegeben:
- Die Strecke S1 beginnt bei der Periode 1440 des Taktsignals CL und bei der Verstärkungsstufe 0, und sie endet bei der Periode 1840 und der Verstärkungsstufe 40. Sie entspricht somit einer Zunahme um 40 Verstärkungsstufen in einem Zeitraum von 400 Perioden des Taktsignals CL.
- Die Strecke S2 beginnt am Endpunkt der Strecke S1 und endet bei der Periode 2020 und der Verstärkungsstufe 46. Dies entspricht einer Zunahme um 6 Verstärkungsstufen in einem Zeitraum von 180 Perioden des Taktsignals CL.
- Die Strecke S3 beginnt am Endpunkt der Strecke S2 und endet bei der Periode 2380 und der Verstärkungsstufe 37. Dies entspricht einer Abnahme um 9 Verstärkungsstufen in einem Zeitraum von 360 Perioden des Taktsignals CL.
- Die Strecke S4 beginnt am Endpunkt der Strecke S3 und endet bei der Periode 2676 und der Verstärkungsstufe 0. Dies entspricht einer Abnahme um 37 Verstärkungsstufen in einem Zeitraum von 296 Perioden des Taktsignals CL.

In der Festzielschaltung von Fig. 3 wird anstelle der Hüllkurve F des Festzielechos der gebrochene Linienzug L zur Festzielunterdrückung verwendet. Hierzu werden nur die Informationen gespeichert, die es ermöglichen, den gebrochenen Linienzug L nachzubilden. Da die Verstärkung nur stufenweise geändert werden kann, wird der Linienzug L durch eine Treppenkurve nachgebildet, bei der die Höhe jeder Stufe gleich der Höhe einer Verstärkungsstufe ist und die Dauer jeder Stufe die Steilheit des Anstiegs bzw. des Abfalls bestimmt. Die Dauer jeder Stufe läßt sich durch die Anzahl der Perioden des Taktsignals CL angeben; die kürzestmögliche Dauer und dementsprechend die größte Steilheit entspricht einer Dauer von einer Periode des Taktsignals CL. Bei dem in Fig. 4 dargestellten Beispiel ergibt sich für die verschiedenen Strecken die folgende Stufendauer:
- für die Strecke S1: 400:40 = 10 Perioden pro Stufe;
- für die Strecke S2: 180:6 = 30 Perioden pro Stufe;
- für die Strecke S3: 360:9 = 40 Perioden pro Stufe;
- für die Strecke S4: 296:37 = 8 Perioden pro Stufe.

Um die Zahl klein zu halten, die die Anzahl der Perioden pro Stufe angibt, ist zusätzlich vorgesehen, daß anstelle des Taktsignals CL eines von mehreren Hilfstaktsignalen verwendet werden kann, die durch Frequenzteilung aus dem Taktsignal CL gebildet werden. In der Festzielschaltung von Fig. 3 stehen zusätzlich zu dem Taktsignal CL mit der Frequenz f_{CL} sechs Hilfstaktsignale mit den Frequenzen f_{CL}/2, f_{CL}/4, f_{CL}/8, f_{CL}/16, f_{CL}/32 und f_{CL}/64 zur Verfügung. Die abzuspeichernde Periodenzahl ist bei Verwendung eines Hilfstaktsignals kleiner; beispielsweise entspricht eine Periode des Hilfstaktsignals mit der Frequenz f_{CL}/8 acht Perioden des Taktsignals CL.

Im Festzielspeicher 50 werden für jede der Strecken S1 bis S4 die folgenden Informationen gespeichert, für die die angegebenen Bitzahlen benötigt werden:
- die verwendete Taktfrequenz: 3 Bits
- die Periodenzahl pro Stufe: 5 Bits
- die Anzahl der Verstärkungsstufen: 6 Bits
- die aufsteigende oder abfallende Richtung: 1 Bit

Somit werden für die Speicherung der Informationen einer Strecke nur 15 Bits und für die Speicherung der Informationen des gesamten Linienzugs L nur 60 Bits Speicherkapazität benötigt.

Der Festzielspeicher 50 enthält demgemäß eine Tabelle mit 4 Zeilen, von denen jede Zeile 2 Bytes zu 8 Bits speichern kann. Die Bits 5 bis 7 des ersten Bytes geben die verwendete Taktfrequenz durch eine der Zahlen 1 bis 7 an. Die Bits 0 bis 4 des ersten Bytes geben die Dauer einer Stufe durch die Anzahl der Perioden der verwendeten Taktfrequenz an, wobei die Periodenzahl von 1 bis 32 betragen kann. Die Bits 0 bis 5 des zweiten Bytes geben die Anzahl der Stufen der betreffenden Strecke an, die von 1 bis 63 betragen kann. Das Bit 6 des zweiten Bytes wird nicht verwendet. Der Binärwert des Bits 7 des zweiten Bytes zeigt an, ob die betreffende Strecke aufwärts oder abwärts gerichtet ist, wobei der Binärwert 1 die Aufwärtsrichtung und der Binärwert 0 die Abwärtsrichtung bezeichnet.

Somit können für das Beispiel von Fig. 4 im Festzielspeicher 50 die folgenden Informationen gespeichert sein:

| Zeile | Takt | Perioden | Richtung | Stufen |
|---|---|---|---|---|
| Zeile 1 | f_{CL} | 10 | 1 | 40 |
| Zeile 2 | f_{CL} | 30 | 1 | 6 |
| Zeile 3 | f_{CL}/8 | 5 | 0 | 9 |
| Zeile 4 | f_{CL}/8 | 1 | 0 | 37 |

Zusätzlich ist ein Festzielstartregister 51 vorgesehen, in dem der Startzeitpunkt des gebrochenen Linienzugs L gespeichert ist, ausgedrückt durch die Anzahl der Perioden des Taktsignals CL ab dem Beginn des Meßzyklus. Bei dem Beispiel von Fig. 4 ist also in dem Festzielstartregister 51 die Zahl 1440 gespeichert. Die Bitbreite des Festzielstartregisters 51 muß gleich der Bitbreite des Distanzzählers 45 sein; bei dem oben angegebenen Beispiel muß also das Festzielstartregister 51 eine Breite von 14 Bits für die Speicherung des Festzielstartwerts haben. Zu einem später erläuterten Zweck ist jedoch im Festzielstartregister 51 noch ein zusätzlicher Speicherplatz für die Speicherung eines Bits enthalten.

Die im Festzielspeicher 50 und im Festzielstartregister 51 gespeicherten Daten werden über den Bus 47 eingegeben. Diese Daten bleiben unverändert, bis aus irgendeinem Grund das Festzielecho neu erfaßt und abgespeichert werden muß.

Der im Festzielstartregister 51 gespeicherte Festzielstartwert liegt dauernd an einem Eingang eines Festzielstartkomparators 52 an, der an seinem anderen Eingang ständig den Zählerstand des Distanzzählers 45 über den Bus 46 empfängt. Der Ausgang des Festzielstartkomparators 52 ist mit einem Auslöseeingang eines Taktfrequenzwählers 53 verbunden, an dessen Ausgang der Takteingang eines Periodenzählers 54 angeschlossen ist. Ein Ausgang des Periodenzählers 54 ist mit dem Takteingang eines Stufenzählers 55 und mit dem Takteingang eines Amplitudenzählers 56 verbunden. Der Amplitudenzähler 56 ist ein Aufwärts-/Abwärtszähler, dessen Zählrichtung durch ein Signal bestimmt wird, das von einem Richtungsregister 57 an einen Zählrichtungseingang angelegt wird. Ein Ausgang des Stufenzählers 55 ist mit einem Steuereingang eines Zeilenwählers 58 verbunden.

Die in jeder Zeile des Festzielspeichers 50 gespeicherten Daten können über die dargestellten Verbindungen in den Taktfrequenzwähler 53, das Richtungsregister 57, den Periodenzähler 54 und den Stufenzähler 55 eingegeben werden.

Der bisher beschriebene Teil der Festzielschaltung von Fig. 3 arbeitet in der folgenden Weise:

Vor Beginn der Festzielroutine ist der Amplitudenzähler 56 auf 0 gestellt, und der Zeilenwähler 58 steht auf der Zeile 1 des Festzielspeichers 50. Der Ablauf der Festzielroutine beginnt in jedem Meßzyklus, wenn der Festzielstartkomparator 52 feststellt, daß der Zählerstand des Distanzzählers 45 gleich dem im Festzielstartregister 51 gespeicherten Festzielstartwert ist. Der Festzielstartkomparator 52 gibt dann an seinem Ausgang ein Signal ab, das dem Taktfrequenzwähler 53 und weiteren Schaltungsblöcken zugeführt wird und folgendes bewirkt:
- die in Zeile 1 des Festzielspeichers 50 gespeicherte Nummer der Taktfrequenz wird in den Taktfrequenzwähler 53 eingegeben;
- die in Zeile 1 des Festzielspeichers 50 gespeicherte Periodenzahl wird in den Periodenzähler 54 eingegeben;
- das in Zeile 1 des Festzielspeichers 50 gespeicherte Richtungsbit wird in das Richtungsregister 57 eingegeben;
- die in Zeile 1 des Festzielspeichers 50 gespeicherte Stufenzahl wird in den Stufenzähler 55 eingegeben.

Die sich daraus ergebende Funktionsweise soll mit den Zahlenwerten des in Fig. 4 dargestellten Beispiels erläutert werden.

Der Taktfrequenzwähler 53 wählt die durch die eingegebene Nummer bezeichnete Taktfrequenz f_{CL} aus und sendet Impulse mit dieser Taktfrequenz zu dem Periodenzähler 54. Der Periodenzähler 54 zählt die Perioden dieser Taktfrequenz und gibt jeweils nach Zählung der vom Speicher 50 eingegebenen Periodenzahl am Ausgang einen Zählimpuls ab. Der Periodenzähler 54 kann beispielsweise als Ringzähler ausgebildet sein, dessen Zyklus durch die vom Speicher 50 eingegebene Periodenzahl bestimmt ist und der bei jedem Nulldurchgang einen Zählimpuls abgibt. Somit liefert der Periodenzähler 54 beim angegebenen Beispiel nach jeweils 10 Perioden der Taktfrequenz f_{CL} einen Zählimpuls zu dem Stufenzähler 55 und zu dem Amplitudenzähler 56. Der Stufenzähler 55 ist ein Rückwärtszähler, dessen Zählerstand auf die vom Festzielspeicher 50 eingegebene Stufenzahl 40 eingestellt worden ist und durch jeden vom Periodenzähler 54 abgegebenen Zählimpuls um einen Schritt heruntergezählt wird. Der Amplitudenzähler 56 wird durch jeden vom Periodenzähler 54 abgegebenen Zählimpuls in der Zählrichtung weitergeschaltet, die durch das im Richtungsregister 57 stehende Richtungsbit bestimmt ist. Da das in Zeile 1 abgespeicherte Richtungsbit den Binärwert 1 hat, wird der Zählerstand des Amplitudenzählers 56 schrittweise erhöht.

Der Stufenzähler 55 erreicht den Zählerstand 0, wenn er 40 Zählimpulse vom Periodenzähler 54 empfangen hat. Dies ist nach 400 Perioden des Taktsignals CL der Fall. Somit ist der Zählerstand des Amplitudenzählers 56 in dem laufenden Meßzyklus vom Wert 0 im Zeitpunkt 1440 schrittweise auf den Wert 40 im Zeitpunkt 1840 angestiegen; dies entspricht genau dem linearen zeitlichen Verlauf der Strecke S1 in Fig. 4.

Beim Erreichen des Zählerstands 0 liefert der Stufenzähler 55 einen Impuls zum Zeilenwähler 58, der dadurch auf die nächste Zeile 2 weitergeschaltet wird. Nunmehr werden die in Zeile 2 gespeicherten Daten in die Schaltungsblöcke 53, 57, 54 und 55 eingegeben, und der zuvor für die Zeile 1 beschriebene Vorgang wiederholt sich mit den neuen Werten. Der Frequenzwähler 53 liefert weiterhin Impulse mit der Taktfrequenz f_{CL} zum Periodenzähler 54, der jetzt nach jeweils 30 Perioden dieser Taktfrequenz einen Zählimpuls zum Stufenzähler 55 und zum Amplitudenzähler 56 liefert. Der Stufenzähler 55 wird durch jeden Zählimpuls um einen Schritt von dem Anfangszählerstand 6 heruntergezählt, und der Zählerstand des Amplitudenzählers 56 wird weiterhin durch jeden Zählimpuls um einen Schritt erhöht. Der Stufenzähler 55 erreicht den Zählerstand 0 nach 6 Zählimpulsen, also nach 180 Perioden des Taktsignals CL, im Zeitpunkt 2020 des Meßzyklus, und gleichzeitig hat der Amplitudenzähler den Zählerstand 56 erreicht. Der schrittweise Anstieg des Zählerstands des Amplitudenzählers 56 entspricht somit genau dem zeitlichen Verlauf der Strecke S2 in Fig. 4.

Beim Erreichen des Zählerstands 0 schaltet der Stufenzähler 55 den Zeilenwähler 58 auf die Zeile 3 weiter, wodurch die in dieser Zeile gespeicherten Daten in die Blöcke 53, 57, 54 und 55 eingegeben werden, worauf der beschriebene Vorgang mit den neuen Werten wiederholt wird. Der Frequenzwähler 53 liefert nunmehr Impulse mit der Hilfstaktfrequenz f_{CL}/8 zum Periodenzähler 54, der jeweils nach 5 Perioden dieser Hilfstaktfrequenz einen Zählimpuls zum Stufenzähler 55 und zum Amplitudenzähler 56 liefert. Der Stufenzähler 55 wird durch jeden Zählimpuls um einen Schritt vom Anfangszählerstand 9 heruntergezählt. Der Zählerstand des Amplitudenzählers 56 wird nunmehr durch jeden Zählimpuls um einen Schritt verringert, da das im Richtungsregister 57 stehende Richtungsbit den Binärwert 0 hat. Nach 9 Zählimpulsen 54 erreicht der Stufenzähler 55 den Zählerstand 0. Dies ist nach 45 Perioden der Hilfstaktfrequenz f_{CL}/8 der Fall, was 360 Perioden der Taktfrequenz f_{CL} entspricht. Gleichzeitig, also im Zeitpunkt 2380 des Meßzyklus, hat der Amplitudenzähler 56 den Zählerstand 37 erreicht, was genau dem zeitlichen Verlauf der Strecke S3 in Fig. 4 entspricht.

Der gleiche Vorgang wiederholt sich anschließend mit den in Zeile 4 des Festzielspeichers 50 gespeicherten Daten. Der Frequenzwähler 53 liefert weiterhin Impulse mit der Taktfrequenz f_{CL}/8 zum Periodenzähler 54, der nunmehr für jeden dieser Taktimpulse einen Zählimpuls am Ausgang abgibt. Der Stufenzähler 55 wird durch die Zählimpulse vom Anfangszählerstand 37 schrittweise heruntergezählt, und der Zählerstand des Amplitudenzählers 56 wird durch jeden Zählimpuls um einen Schritt verringert. Nach 37 Zählimpulsen erreicht sowohl der Stufenzähler 55 als auch der Amplitudenzähler 56 den Zählerstand 0. Dies ist nach 37 Perioden der Taktfrequenz f_{CL}/8, also nach 296 Perioden der Taktfrequenz f_{CL} im Zeitpunkt 2676 des Meßzyklus der Fall. Damit ist der Inhalt des Festzielspeichers 50 abgearbeitet und die Festzielroutine für diese Festzielschaltung beendet.

Es ist somit zu erkennen, daß der Zählerstand des Amplitudenzählers 56 im Verlauf des Meßzyklus stets dem Amplitudenwert des gebrochenen Linienzugs L entspricht, ausgedrückt durch die Anzahl der Verstärkungsstufen des Verstärkers 21. Dieser Zählerstand kann in zwei verschiedenen Betriebsarten zur Unterdrückung des Festzielechos verwendet werden. Die Wahl der Betriebsart wird durch ein zusätzliches Bit im Festzielstartregister 51 bestimmt und erfolgt durch entsprechende Einstellung eines Umschalters 59. Die beiden Betriebsarten werden nachfolgend erläutert.

### Betriebsart 1: Verstärkungssteuerung

Die Betriebsart 1 wird eingestellt, wenn das zusätzliche Bit im Festzielstartregister 51 den Binärwert 1 hat. In dieser Betriebsart nimmt der Umschalter 59 die in Fig. 3 dargestellte Stellung ein. Er verbindet in dieser Stellung den Ausgang des Amplitudenzählers 56 mit einem Eingang des Maximalwertdetektors 32, so daß der jeweils aktuelle Zählerstand des Amplitudenzählers 56 als Datenwort zu dem Maximalwertdetektor 32 übertragen wird. Diese Übertragung bleibt ohne Wirkung, solang andere Datenwörter, die dem Maximalwertdetektor 32 zugeführt werden, einen höheren numerischen Wert haben. Sobald jedoch der Zählerstand des Amplitudenzählers 56 größer als die numerischen Werte aller anderen Datenwörter wird, bestimmt dieser Zählerstand die Verstärkungseinstellung des Verstärkers 21. Die Verstärkung wird mit jeder Änderung des Zählerstands des Amplitudenzählers 56 um eine Stufe derart verändert, daß die Amplitude des gebrochenen Linienzugs L stets unter dem Schwellenwert des Komparators 25 bleibt. Dadurch werden auch alle Signale unterdrückt, die in der Fläche unter dem gebrochenen Linienzug L liegen. Hierzu gehört insbesondere die Hüllkurve F des Festzielechos. Dagegen kann ein Nutzechoimpuls, der dem Festzielecho derart überlagert ist, daß er den gebrochenen Linienzug L übersteigt, vom Komparator 25 detektiert werden.

An eine vom Umschalter 59 zur Ausblendschaltung 40 führende Leitung wird in dieser Stellung des Umschalters 59 dauernd ein Bitsignal des Binärwerts 0 angelegt.

### Betriebsart 2: Ausblendung

In der Betriebsart 2, die durch den Binärwert 0 des zusätzlichen Bits im Festzielstartregister 51 bestimmt wird, wird der Umschalter 59 in die andere Stellung gebracht. Für diese Betriebsart ist ein Ausblend-Komparator 60 vorgesehen, der an einem Eingang den jeweils aktuellen Zählerstand des Amplitudenzählers 56 und am anderen Eingang das im Verstärkungsregister 37 stehende Datenwort über den Bus 38 empfängt. Der Ausblendkomparator 60 gibt am Ausgang ein Binärsignal ab, das den Binärwert 0 hat, wenn der Zählerstand des Amplitudenzählers 56 kleiner als der numerische Wert des im Verstärkungsregister 37 stehenden Datenworts ist, und das im anderen Fall den Binärwert 1 hat. Dieses Binärsignal wird über den Umschalter 59 der Ausblendschaltung 40 zugeführt, die den Freigabeschalter 26 öffnet, wenn das Binärsignal den Binärwert 1 hat. Somit wird die Auswertung des vom Analogschaltungsteil 20 gelieferten Hüllkurvensignals in der Zeitspanne verhindert, in der der Zählerstand des Amplitudenzählers 56 größer als die numerischen Werte aller anderen dem Maximalwertdetektor 32 zugeführten Verstärkungs-Datenwörter ist, also in der Zeitspanne, in der in der Betriebsart 1 die Verstärkungseinstellung des Verstärkers 21 durch den Zählerstand des Amplitudenzählers 56 bestimmt würde.

In der Betriebsart 2 ist die Verbindung zwischen dem Ausgang des Amplitudenzählers 56 und dem zugeordneten Eingang des Maximalwertdetektors 32 unterbrochen; an diesen Eingang des Maximalwertdetektors 32 wird ständig ein Datenwort des Wertes 00 H angelegt.

Der Umschalter 59, der in Fig. 3 symbolisch mit zwei mechanischen Umschaltkontakten dargestellt ist, enthält natürlich in Wirklichkeit in der Verbindung zwischen dem Amplitudenzähler 56 und dem Maximalwertdetektor 32 eine Gruppe von schnellen elektronischen Umschaltern sowie einen weiteren schnellen elektronischen Umschalter in der Verbindung zwischen dem Ausblendkomparator 60 und der Ausblendschaltung 40.

Der gebrochene Linienzug L beginnt immer mit der Amplitude 0, da der Amplitudenzähler 56 am Beginn auf 0 gestellt ist. Es ist jedoch nicht unbedingt notwendig, daß der Linienzug L auch mit der Amplitude 0 endet, wie dies bei dem Beispiel von Fig. 4 der Fall ist. Wenn die letzte Strecke so definiert ist, daß sie bei einer negativen Amplitude endet, bleibt der Amplitudenzähler 56 beim Erreichen des Zählerstands 0 stehen. Wenn die letzte Strecke so definiert ist, daß sie bei einer von 0 verschiedenen positiven Amplitude endet, bleibt der Amplitudenzähler 56 bei dem Zählerstand stehen, der dieser positiven Amplitude entspricht.

Der gebrochene Linienzug L kann auch aus mehr als vier Strecken bestehen; es muß dann für jede weitere Strecke eine Zeile in der Tabelle im Festzielspeicher 50 hinzugefügt werden. Es hat sich aber gezeigt, daß in der Praxis jedes Festzielecho durch einen Linienzug L aus vier Strecken mit ausreichender Annäherung eingeschlossen werden kann.

Die Erfindung ist zwar am Beispiel einer Abstandsmessung mit Ultraschallwellen beschrieben worden, doch kann sie in gleicher Weise auch bei der Abstandsmessung mit elektromagnetischen Wellen angewendet werden.

## Patentansprüche

1. Verfahren zur Unterdrückung von Festzielechos bei der Abstandsmessung nach dem Impulslaufzeitprinzip, wobei in jedem Meßzyklus in einer Sendephase ein Sendeimpuls mit einer vorgegebenen Sendefrequenz ausgesendet wird und in einer anschließenden Empfangsphase die Hüllkurve der Empfangssignale mit der Sendefrequenz gebildet wird, um die Laufzeit des Nutzechoimpulses zu bestimmen und daraus den zu messenden Abstand zu berechnen, und wobei vor der Messung Informationen über Festzielechos erfaßt und gespeichert werden, die in jedem Meßzyklus zur Unterdrückung der Festzielechos verwendet werden, dadurch gekennzeichnet, daß bei der Erfassung der Informationen über ein Festzielecho ein die Hüllkurve des Festzielechos umgebender gebrochener Linienzug aus mehreren geraden Strecken gebildet wird, daß für jede Strecke eine Information über die Amplitude des Endpunkts der Strecke, eine Information über die Änderungsrichtung der Strecke und eine Information über die Steigung der Strecke sowie für die erste Strecke eine Information über den Zeitpunkt des Anfangs der Strecke im Meßzyklus gespeichert werden, daß im Verlauf jedes Meßzyklus ab dem Zeitpunkt des Anfangs der ersten Strecke für jede Strecke Zählimpulse mit einer durch die Steigungsinformation bestimmten Folgefrequenz in einer durch die Richtungsinformation bestimmten Zählrichtung bis zum Erreichen eines durch die Amplitudeninformation bestimmten Zählerstandes gezählt werden, und daß im Verlauf des Meßzyklus der jeweils aktuelle Zählerstand zur Steuerung der Unterdrückung des Festzielechos verwendet wird.

2. Verfahren nach Anspruch 1, dadurch gekennzeichnet, daß in Abhängigkeit von dem im Verlauf des Meßzyklus jeweils aktuellen Zählerstand die Verstärkung eines die Empfangssignale verstärkenden Verstärkers derart eingestellt wird, daß die Amplitude eines dem gebrochenen Linienzug entsprechenden Hüllkurvensignals einen vorgegebenen Schwellenwert nicht überschreitet.

3. Verfahren nach Anspruch 1, dadurch gekennzeichnet, daß in Abhängigkeit von dem im Verlauf des Meßzyklus jeweils aktuellen Zählerstand die Auswertung des Hüllkurvensignals in einer Zeitspanne gesperrt wird, in der die Amplitude eines dem gebrochenen Linienzug entsprechenden Hüllkurvensignals einen vorgegebenen Schwellenwert überschreiten würde.

4. Verfahren nach einem der Ansprüche 1 bis 3, dadurch gekennzeichnet, daß jeder Zählimpuls einer Amplitudenstufe der Strecke entspricht, daß als Amplitudeninformation die Anzahl der Amplitudenstufen der Strecke gespeichert wird und daß als Steigungsinformation eine Information für die Dauer einer Amplitudenstufe gespeichert wird.

5. Verfahren nach Anspruch 4, dadurch gekennzeichnet, daß als Information für die Dauer einer Amplitudenstufe eine Taktfrequenz und eine der Dauer entsprechende Periodenzahl der Taktfrequenz gespeichert werden, und daß in jedem Meßzyklus die Perioden der Taktfrequenz gezählt werden und jeweils nach Zählung der gespeicherten Periodenzahl ein Zählimpuls erzeugt wird.

6. Anordnung zur Durchführung des Verfahrens nach einem der vorhergehenden Ansprüche, mit einer Einrichtung (12,14,15) zu Aussendung eines Sende impulses in der sendephase jedes Meßzyklus und mit einer Signalverarbeitungsschaltung (16) für die Empfangssignale, die in der sich an die Sendephase anschließenden Empfangsphase in jedem Meßzyklus empfangen werden, wobei die Signalverarbeitungsschaltung (16) einen Analogschaltungsteil (20) zur Verstärkung und Filterung der Empfangssignale und zur Bildung der Hüllkurve der Empfangssignale enthält, und wobei die Signalverarbeitungsschaltung (16) einen Distanzzähler (45) enthält, der im Verlauf des Meßzyklus fortlaufend die Perioden eines Taktsignals als Maß für die seit dem Beginn des Meßzyklus verstrichene Zeit zählt, dadurch gekennzeichnet, daß die Signalverarbeitungsschaltung (16) für jedes Festziel, dessen Festzielecho unterdrückt werden soll, eine Festzielschaltung (34,35,36) aufweist, die einen Festzielspeicher (50) enthält, in dem die Amplitudeninformationen, die Richtungsinformationen und die Steigungsinformationen für alle Strecken des gebrochenen Linienzugs in Form einer Tabelle gespeichert sind, die für jede Strecke eine Zeile enthält, und daß jede Festzielschaltung ein Festzielstartregiste (51) enthält, in dem die Informationen über den Zeitpunkt des Anfangs der ersten Strecke im Meßzyklus gespeichert ist, sowie einen Festzielstartkomparator (52), der die im Festzielstartregister (51) gespeicherte Information ständig mit dem Zählerstand des Distanzzählers (45) ver-gleicht und bei Feststellung der Gleichheit die zeilenweise Verarbeitung der im Festzielspeicher (50) gespeicherten Informationen auslöst.

7. Anordnung nach Anspruch 6, dadurch gekennzeichnet, daß jede Festzielschaltung einen Zeilenwähler (58) enthält, der der Reihe nach jeweils eine Zeile der im Festzielspeicher gespeicherten Tabelle auswählt, sowie einen Taktfrequenzwähler (53), der ein Taktsignal mit der in der ausgewählten Zeile gespeicherten Taktfrequenz auswählt, einen Periodenzähler (54), der das ausgewählte Taktsignal vom Taktfrequenzwähler (53) empfängt, die Perioden des Taktsignals zählt und jeweils nach Zählung der in der ausgewählten Zeile gespeicherten Periodenzahl einen Zählimpuls abgibt, einen Stufenzähler (55), der die Zählimpulse zählt und nach Zählung der in der ausgewählten Zeile gespeicherten Stufenzahl den Zeilenwähler (58) auf die nächste Zeile fortschaltet, und einen Amplitudenzähle (56), der die Zählimpulse in der Zählrichtung zählt, die durch die in der ausgewählten Zeile gespeicherte Richtungsinformation bestimmt ist.

8. Anordnung nach Anspruch 7, dadurch gekennzeichnet, daß der Analogschaltungsteil in der Signalverarbeitungsschaltung (16) einen Verstärker für die Empfangssignale enthält, dessen Verstärkung gemäß einem in einem Verstärkungsregister gespeicherten Datenwort einstellbar ist, daß die Signalverarbeitungsschaltung (16) einen Maximalwertdetektor (32) enthält, der an mehreren Eingängen Datenwörter von verschiedenen Quellen empfängt und jeweils das Datenwort mit dem höchsten numerischen Wert in das Verstärkungsregister (37) überträgt und daß der Maximalwertdetektor (32) für jede Festzielschaltung (34,35,36) einen Eingang aufweist, der mit dem Ausgang des Amplitudenzählers (56) der zugeordneten Festzielschaltung verbindbar ist, so daß der Zählerstand des Amplitudenzählers (56) als Datenwort eingegeben wird.

9. Anordnung nach Anspruch 8, dadurch gekennzeichnet, daß die Signalverarbeitungsschaltung (16) eine Ausblendschaltung (40) enthält, die bei Empfang eines Ausblendsignals die Auswertung des Hüllkurvensignals für die Dauer des Ausblendsignals unterbricht, daß jede Festzielschaltung einen Ausblendkomparator (60) enthält, der den Zählerstand des Amplitudenzählers fortlaufend mit dem im Verstärkungsregister (37) gespeicherten Datenwort vergleicht und am Ausgang ein Ausblendsignal abgibt, wenn der Zählerstand des Amplitudenzählers (56) gleich dem oder größer als der numerische Wert des im Verstärkungsregister (37) gespeicherten Datenworts ist, und daß der Ausgang des Ausblendkomparators (60) der Ausblendschaltung (40) verbindbar ist.

10. Anordnung nach Anspruch 9, dadurch gekennzeichnet, daß jede Festzielschaltung einen Umschalter (59) enthält, der in einer Stellung den Amplitudenzähler (56) mit dem zugeordneten Eingang des Maximalwertdetektors (32) verbindet und die Verbindung zwischen dem Ausblendkomparator und der Ausblendschaltung (40) unterbricht, und der in der anderen Stellung den Ausblendkomparator (60) mit der Ausblendschaltung (40) verbindet und die Verbindung zwischen dem Amplitudenzähler (56) und dem zugeordneten Eingang des Maximalwertdetektors (32) unterbricht.

11. Anordnung nach Anspruch 10, dadurch gekennzeichnet, daß die Stellung des Umschalter (59) durch ein im Festzielstartregister (51) gespeichertes Bit bestimmt wird.

## Claims

1. A method for fixed target echo suppression in distance measurement on the principle of pulse transit time in which, in each measurement cycle, in a transmitting phase a transmission pulse having a given transmission frequency is emitted and in a subsequent receiving phase the envelope of the received signals with the transmission frequency is formed to determine the transit time of the useful echo pulse and to compute therefrom the distance to be measured, and wherein prior to the measurement, information as to the fixed target echoes is acquired and stored for use in each measurement cycle for suppressing the fixed target echoes, characterized in that for acquiring the information as to a fixed target echo a broken line made up of several straight segments surrounding the envelope of the fixed target echo is formed, that for each segment, information as to the amplitude of the end point of the segment, information as to the changing direction of the segment and information as to the slope of the segment as well as for the first segment, information as to the point in time of the start of the first segment in the measurement cycle are stored, that in the course of each measurement cycle, as of the point in time of the start of the first segment, for each segment counting pulses having a repetition frequency dictated by the slope information are counted in a counting direction dictated by the direction information up to achieving a count dictated by the amplitude information, and that in the course of the measurement cycle the current count is used to control fixed target echo suppression.

2. The method as set forth in claim 1, characterized in that the gain of an amplifier amplifying the received signals is adjusted as a function of each current count in the course of the measurement cycle so that the amplitude of an envelope signal corresponding to the broken line does not exceed a given threshold value.

3. The method as set forth in claim 1, characterized in that the evaluation of the envelope signal as a function of each current count in the course of the measurement cycle is blocked in a time span in which the amplitude of an envelope signal corresponding to the broken line would exceed a given threshold value.

4. The method as set forth in any one of the claims 1 to 3, characterized in that every count pulse corresponds to an amplitude step of the segment, that as amplitude information the number of amplitude steps of the segment is stored, and that as slope information an information for the duration of an amplitude step is stored.

5. The method as set forth in claim 4, characterized in that as information for the duration of an amplitude step a clock frequency and a cycle number of the clock frequency corresponding to the duration are stored, and that in each measurement cycle the cycles of the clock frequency are counted and a count pulse is generated after each count of the cycle number stored.

6. An apparatus for implementing the method according to any one of the preceding claims, comprising means (12, 14, 15) for emitting a transmission pulse in the transmitting phase of each measurement cycle and a signal processing circuit (16) for the received signals received in the receiving phase following the transmitting phase in each measurement cycle, said signal processing circuit (16) containing an analog subcircuit (20) for amplifying and filtering the received signals and for forming the envelope of the received signals, and said signal processing circuit (16) containing a distance counter (45) which continuously counts in the course of the measurement cycle the cycles of a clock signal as a measure of the time elapsed since the commencement of the measurement cycle, characterized in that said signal processing circuit (16) for each fixed target, the fixed target echo of which is to be suppressed, comprises a fixed target circuit (34, 35, 36) containing a fixed target memory (50) in which the amplitude information, the direction information and the slope information are stored for all segments of the broken line in the form of a table which contains for each segment a row, and that each fixed target circuit contains a fixed target start register (51) in which the information as to the time point of commencement of the first segment in the measurement cycle is stored, as well as a fixed target start comparator (52) which continuously compares the information stored in the fixed target start register (51) to the count of the distance counter (45) and which on detecting equality activates row-by-row processing of the information stored in the fixed target memory (50).

7. The apparatus as set forth in claim 6, characterized in that each fixed target circuit contains a row selector (58) which selects in sequence each row of the table held in the fixed target memory, as well as a clock frequency selector (53) selecting a clock signal having the clock frequency held in the selected row, a cycle counter (54) which receives the selected clock signal from the clock frequency selector (53) and which counts the cycles of the clock signal and outputs after every count of the cycle number held in the selected row a count pulse, a step counter (55) which counts the count pulses and after counting the step number held in the selected row advances the row selector (58) to the next row, and an amplitude counter (56) which counts the count pulses in the count direction dictated by the direction information held in the selected row.

8. The apparatus as set forth in claim 7, characterized in that said analog subcircuit in said signal processing circuit (16) contains an amplifier for the received signals, the gain of which is adjustable according to a data word held in a gain register, that said signal processing circuit (16) contains a maximum value detector (32) which receives at several inputs data words from various sources and transfers the data word having the highest numerical value in each case to the gain register (37), and that said maximum value detector (32) comprises for each fixed target circuit (34, 35, 36) an input which is connectable to the output of the amplitude counter (56) of the associated fixed target circuit, so that the count of the amplitude counter (56) is entered as a data word.

9. The apparatus as set forth in claim 8, characterized in that said signal processing circuit (16) contains a blanking circuit (40) which on receiving a blanking signal interrupts the evaluation of the envelope signal for the duration of the blanking signal, that each fixed target circuit contains a blanking comparator (60) which compares the count of the amplitude counter continuously with the data word held in the gain register (37) and outputs a blanking signal when the count of the amplitude counter (56) equals or exceeds the numerical value of the data word held in the gain register (37), and that the output of the blanking comparator (60) is connectable to the blanking circuit (40).

10. The apparatus as set forth in claim 9, characterized in that each fixed target circuit contains a selector switch (59) which in one position connects the amplitude counter (56) to the associated input of the maximum value detector (32) and disconnects the connection between the blanking comparator and the blanking circuit (40), and which in the other position connects the blanking comparator (60) to the blanking circuit (40) and disconnects the connection between the amplitude counter (56) and the associated input of the maximum value detector (32).

11. The apparatus as set forth in claim 10, characterized in that the position of the selector switch (59) is dictated by a bit held in the fixed target start register (51).

## Revendications

1. Procédé destiné à éliminer les échos fixes pendant la mesure de la distance selon le principe de la durée de propagation des impulsions, dans lequel
dans chaque cycle de mesure, une impulsion d'émission est émise avec une fréquence d'émission donnée pendant la phase d'émission, et l'enveloppante des signaux de réception en fonction de la fréquence d'émission est générée pendant la phase de réception consécutive, pour déterminer la durée de propagation de l'impulsion d'écho de référence et calculer à partir de là, la distance à mesurer,
des informations sur les échos fixes sont enregistrées et stockées dans la mémoire avant le processus de mesure lesquelles informations sont utilisées dans chaque cycle de mesure pour éliminer les échos fixes,
caractérisé en ce que,
pendant l'enregistrement des informations sur un écho fixe, le système génère une courbe en ligne brisée formée de plusieurs segments rectilignes, qui entoure l'enveloppante de l'écho fixe, le système stockant dans la mémoire, pour chaque segment, une information sur l'amplitude du point final du segment, une information sur le changement de direction du segment et une information sur la pente du segment, ainsi que, pour le premier segment, une information sur le moment du début du segment dans le cycle de mesure, les impulsions de comptage pour chaque segment étant comptées selon une fréquence de répétition déterminée par l'information sur la pente, dans une direction de comptage définie par l'information sur la direction au cours de chaque cycle de mesure, à partir du moment du début du premier segment, jusqu'à ce que le compteur ait atteint une position déterminée par l'information sur l'amplitude,
et en ce que
chaque position actuelle du compteur est utilisée, au cours du cycle de mesure, pour commander la suppression de l'écho fixe.

2. Procédé selon la revendication 1, caractérisé en ce que, en fonction de la position actuelle du compteur au cours de chaque cycle de mesure, l'amplification d'un amplificateur destiné à amplifier les signaux de réception est régulée de telle sorte que l'amplitude d'un signal de l'enveloppante correspondant à la courbe en ligne brisée ne dépasse pas une valeur seuil prédéfinie.

3. Procédé selon la revendication 1, caractérisé en ce que, en fonction de la position actuelle du compteur au cours de chaque cycle de mesure, la mesure du signal de l'enveloppante est bloquée pendant un intervalle de temps, pendant lequel l'amplitude d'un signal de l'enveloppante correspondant à la courbe en ligne brisée dépasserait une valeur seuil prédéfinie.

4. Procédé selon l'une quelconque des revendications 1 à 3, caractérisé en ce que chaque impulsion de comptage correspond à un étage d'amplitude du segment, en ce que le nombre d'étages d'amplitude du segment est stocké dans la mémoire en tant qu'information sur l'amplitude, et en ce qu'une information sur la durée d'un étage d'amplicude est stockée dans la mémoire en tant qu'information sur la pente.

5. Procédé selon la revendication 4, caractérisé en ce qu'une fréquence de cycles et un nombre de périodes de la fréquence de cycles en fonction de la durée sont stockés dans la mémoire en tant qu'information sur la durée d'un étage d'amplitude, et en ce que, dans chaque cycle de mesure, les périodes de la fréquence de cycles sont comptées et une impulsion de comptage est déclenchée après chaque comptage du nombre de périodes stocké dans la mémoire.

6. Dispositif destiné à la mise en oeuvre du procédé selon l'une quelconque des revendications précédentes, comprenant un dispositif (12, 14, 15) destiné à émettre une impulsion d'émission pendant la phase d'émission de chaque cycle de mesure et comprenant un circuit de traitement des signaux (16), réservé aux signaux de réception qui sont captés dans chaque cycle de mesure pendant la phase de réception consécutive à la phase d'émission, le circuit de traitement des signaux (16) contenant une partie de circuit analogique (20) , destinée à amplifier et filtrer les signaux de réception et destinée à générer l'enveloppante des signaux de réception, et dans le circuit de traitement des signaux (16) contenant un compteur de distance (45) qui, au cours du cycle de mesure, compte en continu les périodes d'un signal de synchronisation en tant que valeur du temps écoulé depuis le début du cycle de mesure,
caractérisé en ce que
- le circuit de traitement des signaux (16) contient pour chaque cible fixe, dont il faut éliminer l'écho fixe, un circuit pour cible fixe (34, 35, 36) qui contient une mémoire pour cible fixe (50), dans laquelle les informations sur l'amplitude, les informations sur la direction et les informations sur la pente pour tous les segments de la ligne brisée sont stockées sous forme de tableau, qui contient une ligne pour chaque segment,
et en ce que
- chaque circuit pour cible fixe contient un registre de lancement de cible fixe (51), dans lequel sont stockées en mémoire les informations sur le moment du début du premier segment dans le cycle de mesure, ainsi qu'un comparateur de lancement de cible fixe (52), qui compare en continu l'information stockée dans le registre de lancement de la cible fixe (51) avec la position du compteur de distance (45) et, en cas de concordance, déclenche le traitement ligne par ligne des informations stockées dans la mémoire pour cible fixe (50).

7. Dispositif selon la revendication 6, caractérisé en ce que chaque circuit pour cible fixe contient
- un sélecteur de lignes (58), qui sélectionne une ligne après l'autre dans le tableau stocké dans la mémoire pour cible fixe, ainsi qu'un sélecteur de fréquence de cycles (53) qui sélectionne un signal de synchronisation contenant la fréquence de cycles stockée dans la ligne sélectionnée,
- un compteur de périodes (54), qui capte le signal de synchronisation sélectionné par le sélecteur de fréquence de cycles (53), compte les périodes du signal de synchronisation et émet une impulsion de comptage après chaque comptage du nombre de périodes stocké dans la ligne sélectionnée, et
- un compteur d'étages (55) qui compte les impulsions de comptage et, après comptage du nombre d'étages stocké dans la ligne sélectionnée, fait avancer le sélecteur de lignes (58) vers la ligne suivante, et un compteur d'amplitude (56), qui compte les impulsions de comptage dans la direction de comptage, qui est déterminée par l'information sur la direction stockée dans la ligne sélectionnée.

8. Dispositif selon la revendication 7, caractérisé en ce que la partie de circuit analogique dans le circuit de traitement des signaux (16) contient un amplificateur réservé aux signaux de réception, dont l'amplification peut être régulée en fonction d'un mot de donnée stockée dans un registre d'amplification, en ce que le circuit de traitement des signaux (16) contient un détecteur de valeur maximale (32), qui capte sur plusieurs entrées des mots de données provenant de différentes sources et transmet chaque fois vers le registre d'amplification (37) le mot de donnée ayant la valeur numérique la plus élevée, et en ce que le détecteur de valeur maximale (32) comporte pour chaque circuit de cible fixe (34, 35, 36) une entrée qui peut être reliée à la sortie du compteur d'amplitude (56) du circuit pour cible fixe correspondant, de telle sorte que la position du compteur d'amplitude (56) est entrée en tant que mot de donnée.

9. Dispositif selon la revendication 8, caractérisé en ce que le circuit de traitement des signaux (16) contient un circuit à suppression (46) qui, à la réception d'un signal de déclenchement, interrompt l'analyse du signal de l'enveloppante pendant la durée du signal de déclenchement, en ce que chaque circuit pour cible fixe contient un comparateur de suppression (60), qui compare en continu la position du compteur d'amplitude avec le mot stocké dans le registre d'amplification (37) et émet à la sortie un signal de déclenchement quand la position du compteur d'amplitude (56) est égale ou supérieure à la valeur numérique du mot de donnée stocké dans le registre d'amplification (37), et en ce que la sortie du comparateur de suppression (60) peut être reliée au circuit à suppression (40).

10. Dispositif selon la revendication 9, caractérisé en ce que chaque circuit pour cible fixe contient un commutateur (59), dont une position établit la liaison entre le compteur d'amplitude (56) et l'entrée correspondante du détecteur de valeur maximale (32) et interrompt la liaison entre le comparateur de suppression et le circuit à suppression (40) et dont l'autre position établit la liaison entre le comparateur de suppression (60) et le circuit à suppression (40) et interrompt la liaison entre le compteur d'amplitude (56) et l'entrée correspondante du détecteur de valeur maximale (32).

11. Dispositif selon la revendication 10, caractérisé en ce que la position du commutateur (59) est déterminée par un bit stocké dans le registre de lancement de la cible fixe (51).
